# EUROPEAN PATENT APPLICATION

(11) **EP 4 847 922 A1**
(43) Date of publication of application: **02.12.2026**
(21) Application number: 25213165.1
(22) Date of filing: 04.11.2025
(51) Int. Cl.: G01P 21/00, B60R 21/01, B60W 30/02, B60R 16/023

(54) **INTEGRATED CONTROL METHOD AND APPARATUS FOR INERTIAL MEASUREMENT UNIT, DEVICE AND MEDIUM**

(30) Priority: 26.05.2025 CN 202510680681
(71) Applicant: Zhejiang Leapmotor Technology Co., Ltd, Hangzhou, Zhejiang 310051 (CN)
(72) Inventor: SONG, Heping, Hangzhou, 310051 (CN); LI, Haifeng, Hangzhou, 310051 (CN)
(74) Representative: Novagraaf Technologies

(57) **Abstract**

The present application relates to the technical field of passenger vehicles. Disclosed are an integrated control method and apparatus for an inertial measurement unit, a device, and a medium; the method includes: after power-on and initialization are completed, collecting, by the inertial measurement unit, an original inertial measurement signal; determining a first precision inertial measurement signal corresponding to the original inertial measurement signal, and transmitting the first precision inertial measurement signal to a domain control host module and a motor vehicle control unit through a dedicated communication link; and determining a second precision inertial measurement signal corresponding to the original inertial measurement signal, and transmitting the second precision inertial measurement signal to a system-on-chip in the airbag control unit through an internal communication link to perform airbag algorithm calibration; and transmitting the second precision inertial measurement signal to an electronic stability control unit through a common communication link.

## Description

### Technical Field

The present application relates to the technical field of passenger vehicles, and in particular, to an integrated control method and apparatus for an inertial measurement unit, a device and a medium.

### Background

With the improvement of the safety of passenger vehicles and the improvement of functions of intelligent systems, it is necessary to mount a plurality of inertial measurement units (IMUs) in the vehicle to satisfy different requirements. For example, an airbag control unit (ACU) requires a low-precision IMU to monitor rollover, electronic stability control (ESC) program requires a medium-precision IMU, and an intelligent driving system requires a high-precision IMU to support an autonomous driving function. These IMU modules have low integration, which leads to high costs and insufficient resource utilization.

Therefore, how to meet all requirements using a single IMU module while achieving high integration of signal resources and reducing both costs and weight has become a technical problem to be solved urgently.

### Summary

Some embodiments of the present application provide an integrated control method and apparatus for an inertial measurement unit, a device and a medium. The embodiments of the present application achieve the technical effects of high integration of signal resources and reduced costs and weight.

In order to achieve the described object, main technical solutions adopted in the present application include:
According to a first aspect, the embodiments of the present application provide an integrated control method for an inertial measurement unit, which is applied to an airbag control unit, wherein the airbag control unit is integrated with the inertial measurement unit; the method includes:
   after power-on and initialization are completed, an original inertial measurement signal is collected by the inertial measurement unit;
   in response to receiving the original inertial measurement signal, a first precision inertial measurement signal corresponding to the original inertial measurement signal is determined, and the first precision inertial measurement signal is transmitted to a domain control host module and a motor vehicle control unit through a dedicated communication link; and
   in response to receiving the original inertial measurement signal, a second precision inertial measurement signal corresponding to the original inertial measurement signal is determined, and the second precision inertial measurement signal is transmitted to a system-on-chip in the airbag control unit through an internal communication link to perform airbag algorithm calibration; and the second precision inertial measurement signal is transmitted to an electronic stability control unit through a common communication link.

The integrated control method for an inertial measurement unit provided in the present embodiment uses the first precision inertial measurement signal collected and processed by a single inertial measurement unit, and supports accurate monitoring and controlling of a dynamic change of a vehicle by the domain control host module and the motor vehicle control unit, thereby ensuring real-time response. The second precision inertial measurement signal is used for allowing the airbag control unit and the electronic stability control unit to quickly respond to collision and dynamic stability of the vehicle, thereby improving the safety. By the different transmission modes of the dedicated communication link and the common communication link, a data transmission latency is optimized, and the balance between high-precision control in a driving process and low-delay response in emergency situations is ensured, which further reduces redundant hardware, and achieves the effect of reducing both costs and weight while ensuring the precision and response speed. Thus, the use of a single inertial measurement unit and the integration of signal resources enable high efficiency and safety of vehicle control, while promoting optimization of costs and weight.

In some embodiments, in response to receiving the original inertial measurement signal, the first precision inertial measurement signal corresponding to the original inertial measurement signal is determined, includes:
in response to receiving the original inertial measurement signal, low pass filter processing is performed on the original inertial measurement signal to obtain a filtered inertial measurement signal;
a compensation value corresponding to the filtered inertial measurement signal is determined; and
the filtered inertial measurement signal is compensated by using the compensation value, to obtain the first precision inertial measurement signal.
In the present embodiment, the low pass filter processing effectively eliminates high-frequency noise and reserves low-frequency signals, thereby ensuring the quality of the measurement signal and providing a basis for subsequent compensation. By analyzing the filtered inertial measurement signal and determining the compensation value, it is ensured that dynamic adjustment can be made according to real-time situations. Finally, signal compensation is performed, thereby further improving the precision and reliability of measurement. In the whole process, by means of built-in compensation and low pass filter, there is no need to rely on additional hardware or complex devices, thereby reducing costs. In addition, the precision of the signal is improved, and also high integration of signal resources is achieved.

In some embodiments, the compensation value corresponding to the filtered inertial measurement signal is determined, includes:
a current working temperature of the inertial measurement unit is acquired; and
a compensation value is determined according to the current working temperature and a pre-configured temperature compensation coefficient.

In the present embodiment, the working temperature of the inertial measurement unit is monitored in real time, and measurement precision is automatically adjusted according to a temperature change. Firstly, the inertial measurement unit can learn the state of the device in real time by acquiring the current working temperature without an additional external temperature sensor. Secondly, the inertial measurement unit uses a preset temperature compensation coefficient to achieve automatic compensation, thereby eliminating the effect of temperature on the measurement result. By such a design, the precision and stability of measurement are improved, and also the requirements for external assemblies are greatly reduced, thereby reducing costs and weight. In addition, such a high-integration design enables the inertial measurement unit to be more compact, and effectively reduces the overall weight of the whole vehicle, thereby achieving the object of reducing both costs and weight.

In some embodiments, the temperature compensation coefficient is acquired by the following method:
the inertial measurement unit is calibrated at a plurality of preset temperature points, and an acceleration zero deviation and a gyroscope angular velocity zero deviation at each of the plurality of preset temperature points are acquired; and
the temperature compensation coefficient is obtained according to a zero deviation fit of the acceleration zero deviation and the gyroscope angular velocity zero deviation.

In the present embodiment, the inertial measurement unit is calibrated at the plurality of preset temperature points to acquire data of the acceleration zero deviation and the gyroscope angular velocity zero deviation at each of the plurality of preset temperature points. The temperature compensation coefficient is obtained through a fitting algorithm according to the acquired data of the acceleration zero deviation and gyroscope angular velocity zero deviation. The compensation coefficient can reflect the effects of different temperature changes on signals collected by the inertial measurement unit, thereby providing a scientific basis for temperature compensation. Finally, by using the temperature compensation coefficient, an output signal of the inertial measurement unit can be precisely corrected, thereby effectively improving the measurement precision of the inertial measurement unit in different working environments. Therefore, the single inertial measurement unit not only can meet the control requirements for inertial measurement unit signals of the whole vehicle, but also achieve high integration of signal resources, thereby reducing costs and weight while improving the overall performance and reliability.

In some embodiments, the dedicated communication link adopts a private CANFD bus, and the first precision inertial measurement signal is transmitted to the domain control host module and the motor vehicle control unit, includes:
the first precision inertial measurement signal is transmitted to the domain control host module and the motor vehicle control unit through the private CANFD bus at a transmission period of a first specified time; and
the common communication link adopts a common CANFD bus, and the second precision inertial measurement signal is transmitted to the electronic stability control unit, includes:
   the second precision inertial measurement signal is transmitted to the electronic stability control unit through the common CANFD bus at a transmission period of a second specified time;
   wherein the first specified time is less than the second specified time.

In some embodiments, in response to receiving the original inertial measurement signal, the second precision inertial measurement signal corresponding to the original inertial measurement signal is determined, includes:
in response to receiving the original inertial measurement signal, a sliding window is moved over the original inertial measurement signal, and an average value in the sliding window in a current time sequence is determined; and
the average value is determined as the second precision inertial measurement signal corresponding to the current time sequence.

In the present embodiment, in response to receiving the original inertial measurement signal, base filtering processing is performed on said signal to obtain the second precision inertial measurement signal, which can effectively remove noise and unnecessary high-frequency components in the original signal, and reduce measurement errors, thereby providing a more stable basic signal for subsequent signal processing.

In some embodiments, the sliding window is moved over the original inertial measurement signal, and the average value in the sliding window in the current time sequence is determined, includes:
a length of the sliding window is determined; and
in the current time sequence, values of all original inertial measurement signals in the sliding window are added, and a sum is divided by the length to obtain the average value.

In the present embodiment, by selecting a suitable sliding window length, the original inertial measurement signal is balanced between real-time performance and precision, and average value processing of the sliding window is performed, which can effectively eliminate noise in the signal, thereby improving the quality and reliability of the signal. It is suitable for the airbag control unit and the electronic stability control unit that have high real-time requirements but relatively low precision requirements.

According to a second aspect, some embodiments of the present application provide an integrated control apparatus for an inertial measurement unit, which is applied to an airbag control unit, wherein the airbag control unit is integrated with the inertial measurement unit; the apparatus includes:
a signal collecting assembly, configured to collect, by the inertial measurement unit after power-on and initialization are completed, an original inertial measurement signal;
a first precision processing assembly, configured to determine, in response to receiving the original inertial measurement signal, a first precision inertial measurement signal corresponding to the original inertial measurement signal, and configured to transmit the first precision inertial measurement signal to a domain control host module and a motor vehicle control unit through a dedicated communication link; and
a second precision processing assembly, configured to determine, in response to receiving the original inertial measurement signal, a second precision inertial measurement signal corresponding to the original inertial measurement signal, and configured to transmit the second precision inertial measurement signal to a system-on-chip in the airbag control unit through an internal communication link to perform airbag algorithm calibration; and configured to transmit the second precision inertial measurement signal to an electronic stability control unit through a common communication link.

According to a third aspect, some embodiments of the present application provide a computer device, including:
a memory and a processor, wherein the memory and the processor are in communication connection with each other; the memory stores computer instructions; and the processor executes, by executing the computer instructions, the integrated control method for an inertial measurement unit as described above.

According to a fourth aspect, some embodiments of the present application provide a computer-readable storage medium, wherein the computer-readable storage medium stores computer instructions, wherein the computer instructions are used to enable a computer to execute the integrated control method for an inertial measurement unit as described above.

### Brief Description of the Drawings

To describe the technical solutions in the specific embodiments of the present application or in the art known to inventors more clearly, hereinafter, the accompanying drawings required for describing the specific embodiments or the art known to inventors will be briefly introduced; apparently, the accompanying drawings in the following description show some embodiments of the present application, and for a person of ordinary skill in the art, other drawings may also be obtained according to these drawings without creative efforts.
Fig. 1 is a flowchart of an integrated control method for an inertial measurement unit provided according to some embodiments of the present application;
Fig. 2 is a flowchart of step S3 provided according to some embodiments of the present application;
Fig. 3 is a flowchart of step S33 provided according to some embodiment of the present application;
Fig. 4 is a flowchart of a method for acquiring a temperature compensation coefficient provided according to some embodiments of the present application;
Fig. 5 is a flowchart of step S5 provided according to some embodiments of the present application;
Fig. 6 is a flowchart of step S51 provided according to some embodiments of the present application;
Fig. 7 is a block diagram of an integrated control apparatus for an inertial measurement unit provided according to some embodiments of the present application;
Fig. 8 is a block diagram of an integrated control system for an inertial measurement unit provided according to some embodiments of the present application; and
Fig. 9 is a schematic structural diagram of a computer device provided according to some embodiments of the present application.

### Detailed Description of the Embodiments

To make the objects, technical solutions, and advantages of the embodiments of the present application clearer, hereinafter, the technical solutions in the embodiments of the present application will be clearly and completely described with reference to the accompanying drawings in the embodiments of the present application. Apparently, the embodiments as described are merely some rather than all of the embodiments of the present application. All other embodiments obtained by a person skilled in the art on the basis of the embodiments of the present application without creative efforts shall belong to the scope of protection of the present application.

With the gradual improvement of functions of passenger vehicles, various advanced safety and intelligent systems are gradually becoming standard configurations. In order to support these functions, a plurality of Inertial Measurement Unit (IMU) signals are required in the vehicle, so as to ensure that the system can make timely and precise responses in different scenarios. The requirements for IMU signals vary depending on functions, and therefore a plurality of IMU modules exist in the vehicle, and each module serves a specific requirement. For example, an Airbag Control Unit (ACU) is mainly configured to monitor working conditions such as rollover and collision, so as to activate an airbag system. The ACU is integrated with a 5-axis low-precision IMU module, thereby satisfying the requirements for IMU signals in a rollover working condition. Despite the low precision of the IMU module, this module has extremely high latency requirement, and it needs to ensure that the latency of a signal link does not exceed 1 millisecond, so as to ensure timely triggering of the airbag. The function of an Electronic Stability Control (ESC) program is to ensure that the vehicle maintains stability during driving, in particular in case of emergency maneuvering or skidding. An ESC system requires an IMU signal with at least three axes, and has relatively low requirements for signal precision and latency. In order to support functions such as automatic parking and aided driving, an intelligent driving and intelligent cockpit host requires six-axis high-precision IMU signals. Such signals need to provide extremely high precision (e.g., quadrature coupling error requirement ≤ 0.1 %), and have high requirement for signal latency; and generally, the end-to-end latency should be less than 10 milliseconds. In order to meet these requirements, the intelligent driving system is integrated with a high-precision IMU module, for performing temperature calibration. A Motor Vehicle Control Unit (MVCU) is used to control the operation of an electric motor, and closely cooperate with the intelligent driving system, and therefore an IMU signal with high precision is also required to provide precise positioning and stability support.

However, since there are a plurality of IMU modules in the vehicle, the overall cost is relatively high. Different functional modules have different requirements for IMU signals, resulting in a low integration level of the IMU modules, such that the existing resources cannot be fully utilized. For example, an IMU signal of the ACU is used only when performing rollover calibration; and in other cases, the signal is not required, or only serves as a redundant backup; and an IMU signal of the ESC system mainly comes from the ACU, and if rollover calibration is not performed, resources may be wasted.

Therefore, how to use a single inertial measurement unit (IMU) to satisfy the control of all IMU signals of the whole vehicle, and achieve high integration of signal resources, so as to achieve the object of reducing costs and reducing weight is a technical problem to be solved urgently at present.

In order to solve the described technical problem, according to the embodiments of the present application, embodiments of an integrated control method for an inertial measurement unit are provided. It should be noted that the steps shown in the flowchart of the drawings can be executed in a computer system such as a group of computer executable instructions; furthermore, although a logic sequence is shown in the flowchart, in some cases, the shown or described steps may be executed in a sequence different from that described here.

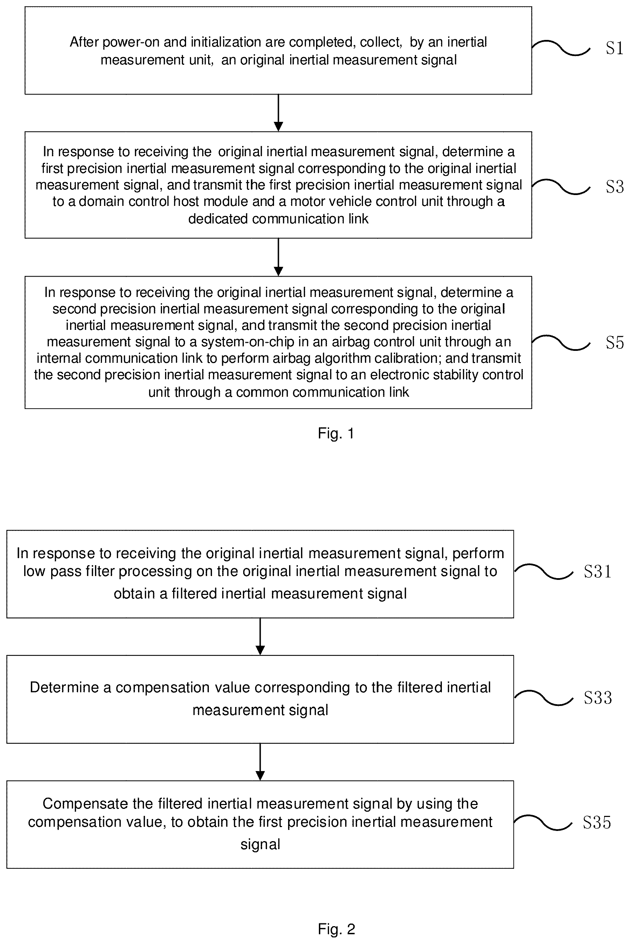

Provided in the present embodiment is an integrated control method for an inertial measurement unit. Fig. 1 is a flowchart of an integrated control method for an inertial measurement unit provided according to some embodiments of the present application, said method being applied to an airbag control unit, wherein the airbag control unit is integrated with the inertial measurement unit. As shown in Fig. 1, the flow includes the following steps:
step S1: after power-on and initialization are completed, an original inertial measurement signal is collected by the inertial measurement unit.

The airbag control unit (ACU) is a core component of an automotive airbag system, and is mainly responsible for receiving and processing collision signals, for determining whether an airbag needs to be deployed, and for issuing an ignition instruction if necessary. The inertial measurement unit (IMU) is an apparatus that measures the three-axis attitude angle (or angular rate) and acceleration of an object. Generally, an IMU includes three single-axis accelerometers and three single-axis gyroscopes. The accelerometers detect acceleration signals of the object at three independent axes in a carrier coordinate system, and the gyroscopes detect angular velocity signals of the carrier relative to a navigation coordinate system, thereby achieving measurement of angular velocity and acceleration of the object in a three-dimensional space, and accordingly calculating an attitude of the object. Specifically, in order to avoid the effect of a high-temperature welding process on the performance of the inertial measurement unit, integrating the inertial measurement unit in the airbag control unit specifically involves packaging an IMU chip in the airbag control unit, and connecting same to a printed circuit board (PCB) of the airbag control unit through bolts, instead of using a welding method. The inertial measurement unit herein includes acceleration sensors in three directions and angular velocity gyroscope sensors in three directions, wherein the orthogonal coupling error is ≤±0.3%, the whole temperature scale error is ≤0.15%, and the sampling rate is at least 1 kHz, so as to satisfy the requirement of an airbag calibration algorithm of the airbag control unit.

After the airbag control unit is powered on and initialized, the inertial measurement unit begins to work. The initialization process includes calibrating internal parameters of the inertial measurement unit to ensure that the inertial measurement unit can output accurate signals under current working conditions. The inertial measurement unit collects original inertial measurement signals at a sampling rate of at least 1 kHz, including acceleration signals in three directions and gyroscope angular velocity signals in three directions.

Step S3: in response to receiving the original inertial measurement signal, a first precision inertial measurement signal corresponding to the original inertial measurement signal is determined, and the first precision inertial measurement signal is transmitted to a domain control host module and a motor vehicle control unit through a dedicated communication link.

Specifically, the collected original inertial measurement signal is transmitted to a Micro Control Unit (MCU) inside the airbag control unit through a Serial Peripheral Interface (SPI) bus. The SPI bus is a high-speed synchronous serial communication protocol, and is suitable for transmitting high-precision sensor data. The micro control unit performs initial processing, such as filtering, calibrating, etc., on the original inertial measurement signal to remove noise and correct deviations. The domain control host module is integrated with intelligent driving SOC with an intelligent cockpit SOC, and can efficiently process and exchange signals. The intelligent driving SOC and the intelligent cockpit SOC cooperate with each other through an internal bus IPC (Inter Process Communication) to provide real-time data processing and response. The intelligent driving SOC is responsible for advanced driver assistance functions, such as fully automatic parking and intelligent city piloting; and the intelligent cockpit SOC processes functions such as driver fatigue detection and face recognition, thereby ensuring the driver's safety and driving experience. Here, the processing and transmission latency of the first precision inertial measurement signal are strictly controlled, and it is ensured that the processing is completed within 6.5 ms, thereby satisfying a high requirement that the end-to-end latency is less than 10 ms.

Step S5: in response to receiving the original inertial measurement signal, a second precision inertial measurement signal corresponding to the original inertial measurement signal is determined, and the second precision inertial measurement signal is transmitted to a system-on-chip in the airbag control unit through an internal communication link to perform airbag algorithm calibration; and the second precision inertial measurement signal is transmitted to an electronic stability control unit through a common communication link.

Specifically, the collected original inertial measurement signal is transmitted to a Micro Control Unit (MCU) inside the airbag control unit through the SPI bus. The airbag control unit and the electronic stability control unit require low-latency IMU signals to ensure fast response. Although the precision requirements thereof are not as high as that for intelligent driving, the signals must be accurate enough to support airbag algorithm calibration and dynamic stability detection. Therefore, the micro control unit performs the most basic filtering operation on the original inertial measurement signal to remove high-frequency noise. The processed second precision inertial measurement signal is transmitted to the system-on-chip (SOC) inside the airbag control unit through the SPI bus. The system-on-chip (SOC) inside the airbag control unit is responsible for the airbag algorithm calibration, including a reasonable time for airbag deployment and a determination of whether to deploy the airbag. The System on Chip (SOC) is a highly integrated chip, and integrates a plurality of functional modules into a single chip. In the airbag control unit (ACU), the SOC is responsible for processing and managing various signals and algorithms related to the airbag, so as to ensure that the airbag is properly deployed within an appropriate time.

In addition, the processed second precision inertial measurement signal is transmitted to the electronic stability control (ESC) unit through the common communication link. The electronic stability control (ESC) unit is a key component in an automotive electronic system, is used for monitoring and controlling the dynamic stability of the vehicle, automatically adjusts a braking force and power output by monitoring a motion state of the vehicle in real time, i.e. receiving the second precision inertial measurement signal, so as to prevent loss of control or side slip of the vehicle.

In some embodiments, the dedicated communication link adopts a private CANFD bus, and the first precision inertial measurement signal is transmitted to the domain control host module and the motor vehicle control unit, includes: the first precision inertial measurement signal is transmitted to the domain control host module and the motor vehicle control unit through the private CANFD bus at a transmission period of a first specified time; and
the common communication link adopts a common CANFD bus, and the second precision inertial measurement signal is transmitted to the electronic stability control unit, includes: the second precision inertial measurement signal is transmitted to the electronic stability control unit through the common CANFD bus at a transmission period of a second specified time;
wherein the first specified time is less than the second specified time.

In particular, the first precision inertial measurement signal is transmitted through a private CANFD (Controller Area Network flexible data) bus at a transmission period of a first specified time (for example 1 ms), so as to ensure low latency. A domain control host module HPC (High Performance Computing) receives the first precision inertial measurement signal, which is used for an intelligent driving function, such as fully automatic parking and city intelligent piloting. The domain control host module (HPC) is a high-performance computing platform in a modern automotive electronic architecture, and is used for centralized processing and management of multiple advanced functions of a vehicle, such as intelligent driving and intelligent cockpit. It usually integrates a plurality of high-performance System on Chips (SOCs) and a complex software system, so as to implement efficient data processing and function coordination. In the embodiments of the present application, the domain control host module is integrated with an intelligent driving SOC (System on Chip) and an intelligent cockpit SOC (System on Chip), and can efficiently process and exchange signals. The intelligent driving SOC and the intelligent cockpit SOC cooperate with each other through an internal bus IPC to provide real-time data processing and response.

The motor vehicle control unit (MVCU) receives the first precision inertial measurement signal, which is used for a motor vehicle control function, such as motor control and energy management. The motor vehicle control unit (MVCU) is used for managing and controlling an electric drive system of the vehicle, and is responsible for regulating the rotational speed of the motor, the torque output, and the recovery and management of energy, so as to achieve efficient driving and energy utilization of the vehicle.

The electronic stability control unit requires the second precision inertial measurement signal, and an end-to-end latency is required to be about 20 ms. In order to avoid overload of the private CANFD bus, and reduce the probability of bus breakdown and signal transmission error, the common CANFD bus is used to transmit the second precision inertial measurement signal, such that the use efficiency of the common CANFD bus is optimized while satisfying the real-time performance at the transmission period of the second specified time (20 ms).

Here, the first specified time is generally used for tasks with high precision requirements, and the prolonging of the second specified time may reduce the system load pressure. By allocating data with different precision and real-time requirements to different time intervals, the system can avoid bus congestion or data loss. The shorter first specified time is mainly used for tasks with higher precision requirements, and the longer second specified time is used for data transmission with lower precision requirements, thereby ensuring effective utilization and efficient running of system resources.

The integrated control method for an inertial measurement unit provided in the present embodiment uses the first precision inertial measurement signal collected and processed by a single inertial measurement unit, and supports accurate monitoring and controlling of a dynamic change of the vehicle by the domain control host module and the motor vehicle control unit, thereby ensuring real-time response. The second precision inertial measurement signal is used for allowing the airbag control unit and the electronic stability control unit to quickly respond to collision and dynamic stability of the vehicle, thereby improving the safety. By the different transmission modes of the dedicated communication link and the common communication link, a data transmission latency is optimized, and the balance between high-precision control in a driving process and low-delay response in emergency situations is ensured, which further reduces redundant hardware, and achieves the effect of reducing both costs and weight while ensuring the precision and response speed. Thus, the use of a single inertial measurement unit and the integration of signal resources enable high efficiency and safety of vehicle control, while promoting optimization of costs and weight.

Fig. 2 is a flowchart of step S3 provided according to some embodiments of the present application. The flow includes the following steps:
step S31: in response to receiving the original inertial measurement signal, low pass filter processing is performed on the original inertial measurement signal to obtain a filtered inertial measurement signal.

Specifically, the object of Low Pass Filter (LPF) is to eliminate high-frequency noise and interference signals in the original inertial measurement signal and reserve low-frequency components. The inertial measurement unit is subject to various interferences (e.g., electromagnetic interference, vibration interferences) from the external environment during operation, which all introduce high-frequency noise. After the low pass filter processing is performed, the obtained signal from which high-frequency noise has been eliminated is smoother, and is suitable for subsequent high-precision processing.

Step S33: a compensation value corresponding to the filtered inertial measurement signal is determined.

Specifically, a current working temperature of the inertial measurement signal is acquired by using a built-in temperature sensor. The temperature change may affect an output signal of the inertial measurement signal, and cause change of parameters such as zero deviation. Then, the compensation value is calculated according to a temperature compensation coefficient obtained through experimental calibration in advance and in combination with the current working temperature. These compensation coefficients are usually represented in polynomial form, for example a linear compensation model Comp(T)=a₀+a₁T, where T is the current working temperature and a₀ and a₁ are fitting coefficients. The compensation value calculated by substituting the current working temperature into the model is then applied to the filtered inertial measurement signal, so as to correct a deviation caused by temperature change, thereby ensuring that the signal can maintain high precision under different temperature conditions, and satisfying the requirements of high-precision application scenarios, such as intelligent driving.

Step S35: the filtered inertial measurement signal is compensated by using the compensation value, to obtain the first precision inertial measurement signal.

Specifically, by applying the compensation value to the filtered inertial measurement signal, temperature effect may be effectively eliminated, thereby obtaining the first precision inertial measurement signal. Such precision improvement is crucial for ensuring that the inertial measurement signal can provide high-precision data under different temperature conditions, and especially in application fields that require extremely high precision, such as automatic driving and aerospace, this compensation mechanism can significantly improve the reliability and performance of the system. For example, assuming that the current working temperature of the inertial measurement unit is 30°C, the temperature compensation coefficients pre-configured in the micro control unit in the airbag control unit include temperature compensation coefficients a₀=1.5, a₁=0.05 corresponding to acceleration zero deviation, and temperature compensation coefficients a₀=0.02, a₁=0.001 corresponding to gyroscope angular velocity zero deviation; then, upon calculation according to these parameters, the compensation value corresponding to the acceleration zero deviation is a₀+a₁T=1.5+0.05×30=3.0 mg, and the compensation value corresponding to the gyroscope angular velocity zero deviation is a₀+a₁T=0.02+0.001×30=0.05°/s. The inertial measurement signal including an accelerometer and a gyroscope has been filtered by using a low pass filter, and the obtained filtered inertial measurement signals are: X-axis output of the accelerometer is 2 mg, and X-axis output of the gyroscope is 0.02°/s. For the accelerometer, the compensated first precision inertial measurement signal is 2-3=-1 mg; and for the gyroscope, the compensated first precision inertial measurement signal is 0.02-0.05=-0.03°/s.

In the present embodiment, the low pass filter processing effectively eliminates high-frequency noise and reserves low-frequency signals, thereby ensuring the quality of the measurement signal and providing a basis for subsequent compensation. By analyzing the filtered inertial measurement signal and determining the compensation value, it is ensured that dynamic adjustment can be made according to real-time situations. Finally, signal compensation is performed, thereby further improving the precision and reliability of measurement. In the whole process, by means of built-in compensation and low pass filter, there is no need to rely on additional hardware or complex devices, thereby reducing costs. In addition, the precision of the signal is improved, and also high integration of signal resources is achieved.

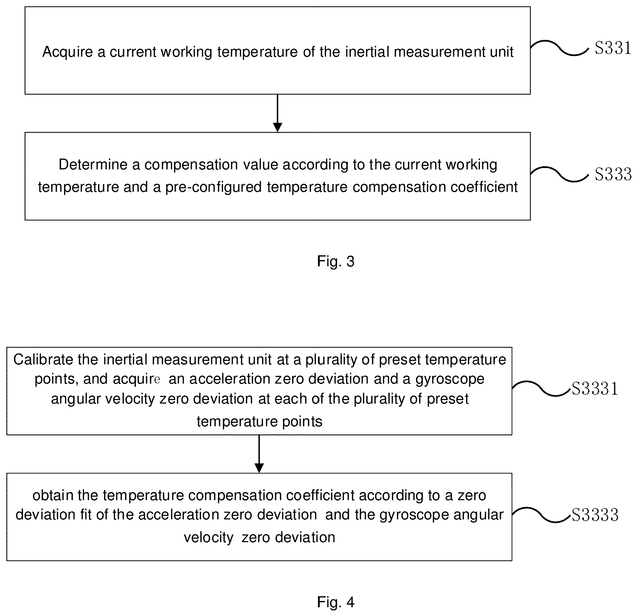

Fig. 3 is a flowchart of step S33 provided according to some embodiments of the present application. The flow includes the following steps:
step S331: a current working temperature of the inertial measurement unit is acquired; and
step S333: a compensation value is determined according to the current working temperature and a pre-configured temperature compensation coefficient.

In particular, first it is necessary to measure the working temperature of the inertial measurement unit by means of the temperature sensor. The performance of the inertial measurement unit may deviate under temperature change, thus the current working temperature must be monitored in real time. It is assumed that during working, the current working temperature of the inertial measurement unit is 30°C. Temperature change can have an effect on zero deviation of the accelerometer and gyroscope. To this end, the compensation value needs to be calculated according to the current working temperature and the pre-configured temperature compensation coefficient.

It is assumed that the temperature compensation coefficient pre-configured in the micro control unit in the airbag control unit includes temperature compensation coefficients a₀=1.5, a₁=0.05 corresponding to the acceleration zero deviation, and temperature compensation coefficients a₀=0.02, a₁=0.001 corresponding to the gyroscope angular velocity zero deviation. Upon calculation according to these parameters, the compensation value corresponding to the acceleration zero deviation is a₀+a₁T=1.5+0.05×30=3.0 mg, and the compensation value corresponding to the gyroscope angular velocity zero deviation is a₀+a₁T=0.02+0.001×30=0.05°/s.

In the present embodiment, the working temperature of the inertial measurement unit is monitored in real time, and measurement precision is automatically adjusted according to a temperature change. Firstly, the inertial measurement unit can learn the state of the device in real time by acquiring the current working temperature without an additional external temperature sensor. Secondly, the inertial measurement unit uses a preset temperature compensation coefficient to achieve automatic compensation, thereby eliminating the effect of temperature on the measurement result. By such a design, the precision and stability of measurement are improved, and also the requirements for external assemblies are greatly reduced, thereby reducing costs and weight. In addition, such a high-integration design enables the inertial measurement unit to be more compact, and effectively reduces the overall weight of the whole vehicle, thereby achieving the object of reducing costs and weight.

Fig. 4 is a flowchart of a method for acquiring a temperature compensation coefficient provided according to some embodiments of the present application. The flow includes the following steps:
step S3331: the inertial measurement unit is calibrated at a plurality of preset temperature points, and an acceleration zero deviation and a gyroscope angular velocity zero deviation at each of the plurality of preset temperature points are acquired.

Specifically, the inertial measurement unit is placed in a temperature-controllable environment chamber, and a high-precision reference temperature sensor is prepared. Output signals of the inertial measurement unit at different temperature points (such as -40°C, 0°C, 25°C, 85°C) are collected, and meanwhile temperature values of the reference temperature sensor are recorded. Statistics on deviations of the output signals of the inertial measurement unit at each temperature point is performed to calculate an acceleration zero deviation and a gyroscope angular velocity zero deviation at each of the plurality of preset temperature points.

Step S3333: the temperature compensation coefficient is obtained according to a zero deviation fit of the acceleration zero deviation and the gyroscope angular velocity zero deviation.

Specifically, a polynomial fitting method is used to obtain the temperature compensation coefficient according to the statistical deviation data. For example, suppose the temperature compensation model is: Comp(T)=a₀+a₁T+a₂T²+...+aₙTⁿ
where T is the temperature, a₀,a₁,...,aₙ are polynomial coefficients which are obtained by fitting calibration data through the least square method.

For example, suppose that in a static state, X-axis output of the accelerometer should be 0 (ignoring the effect of gravity), and X-axis output of the gyroscope should be 0 (no rotation). Output signals of the inertial measurement unit at different temperature points (such as -40°C, 0°C, 25°C and 85°C) are collected for deviation statistics, to obtain the following data: an acceleration zero deviation of 5 mg and a gyroscope angular velocity zero deviation of 0.05°/s at a temperature of -40°C; an acceleration zero deviation of 3 mg and a gyroscope angular velocity zero deviation of 0.03°/s at a temperature of 0°C; an acceleration zero deviation of 1 mg and a gyroscope angular velocity zero deviation of 0.01°/s at a temperature of 25°C; and an acceleration zero deviation of 7 mg and a gyroscope angular velocity zero deviation of 0.07°/s at a temperature of 85°C. The linear model is Comp(T)=a₀+a₁T, where T is temperature, a₀ is a constant term, and a₁ is the temperature coefficient.

The least square method is used to fit the temperature compensation coefficient corresponding to the acceleration zero deviation, so as to obtain a₀=1.5, a₁=0.05. The least square method is used to fit the temperature compensation coefficient corresponding to the gyroscope angular velocity zero deviation, so as to obtain a₀=0.02, a₁=0.001. These temperature compensation coefficients are stored in the micro control unit inside the airbag control unit.

In the present embodiment, the inertial measurement unit is calibrated at the plurality of preset temperature points to acquire data of the acceleration zero deviation and the gyroscope angular velocity zero deviation at each of the plurality of preset temperature points. The temperature compensation coefficient is obtained through a fitting algorithm according to the acquired data of the acceleration zero deviation and gyroscope angular velocity zero deviation. The compensation coefficient can reflect the effects of different temperature changes on signals collected by the inertial measurement unit, thereby providing a scientific basis for temperature compensation. Finally, by using the temperature compensation coefficient, an output signal of the inertial measurement unit can be precisely corrected, thereby effectively improving the measurement precision of the inertial measurement unit in different working environments. Therefore, the single inertial measurement unit not only can meet the control requirements for inertial measurement unit signals of the whole vehicle, but also achieve high integration of signal resources, thereby reducing costs and weight while improving the overall performance and reliability.

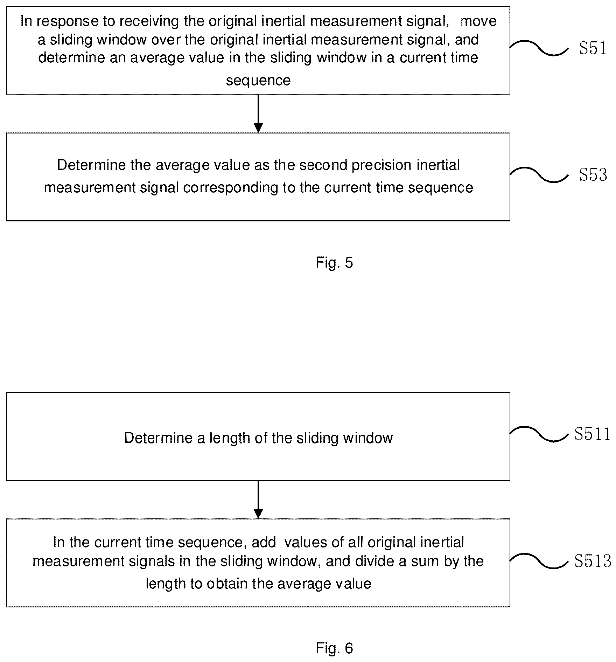

Fig. 5 is a flowchart of step S5 provided according to some embodiments of the present application. The flow includes the following steps:
step S51: in response to receiving the original inertial measurement signal, a sliding window is moved over the original inertial measurement signal, and an average value in the sliding window in a current time sequence is determined; and
Step S53: the average value is determined as the second precision inertial measurement signal corresponding to the current time sequence.

Specifically, although calibration signals of the airbag control unit and the electronic stability control unit have lower precision requirements than that for intelligent driving, they have extremely high requirements for signal latency, and the signal latency needs to be 1 ms or shorter. To meet this requirement, the original inertial measurement signal needs to be processed quickly to ensure the real-time performance of the signal. Therefore, the signal is smoothed by calculating the average value of the original inertial measurement signal x[n] over a particular sliding window, thereby eliminating high-frequency noise. The length N of one sliding window is selected to represent the number of data points used in calculating the average value. The selection of the window size depends on the characteristics of the signal and the degree of smoothing required. The first N data points are collected from a signal sequence, and the window is initialized. Initial data points within the window are x[0], x[1], ..., x[N-1]. And the average value of the data points within the window is calculated as: $y \left[n\right] = \frac{1}{N} {\sum }_{k = 0}^{N - 1} x \left[n-k\right]$

The calculated average value y[n] determined as the second precision inertial measurement signal corresponding to the current time sequence.

In the present embodiment, in response to receiving the original inertial measurement signal, base filtering processing is performed on said signal to obtain the second precision inertial measurement signal, which can effectively remove noise and unnecessary high-frequency components in the original signal, and reduce measurement errors, thereby providing a more stable basic signal for subsequent signal processing.

Fig. 6 is a flowchart of step S51 provided according to some embodiment of the present application, and the flow includes the following steps:
step S511: a length of the sliding window is determined; and
step S513: in the current time sequence, values of all original inertial measurement signals in the sliding window are added, and a sum is divided by the length to obtain the average value.

In particular, the length N of the sliding window is determined for calculating the moving average value. First N data points of the original inertial measurement signal sequence are collected, the window is initialized, an average value of the data points in the window is calculated, and a first filtering result y[N-1] is obtained. As time passes, a new data point (x[n]) will continually enter the signal sequence. When a new data point enters the signal sequence, the window slides, the earliest data point (x[n-N]) is removed, and the new data point (x[n]) is added. A new average value within the sliding window is recalculated. For example, data points of the window from (x[n-N+1]) to (x[n]) will generate a new average value (y[n]), thus ensuring real-time smoothness of the signal. Therefore, the corresponding average value in the current time sequence may be calculated in real time according to this method, so as to obtain smooth data.

In the present embodiment, by selecting a suitable sliding window length, the original inertial measurement signal is balanced between real-time performance and precision, and average value processing of the sliding window is performed, which can effectively eliminate noise in the signal, thereby improving the quality and reliability of the signal. It is suitable for the airbag control unit and the electronic stability control unit that have high real-time requirements but relatively low precision requirements.

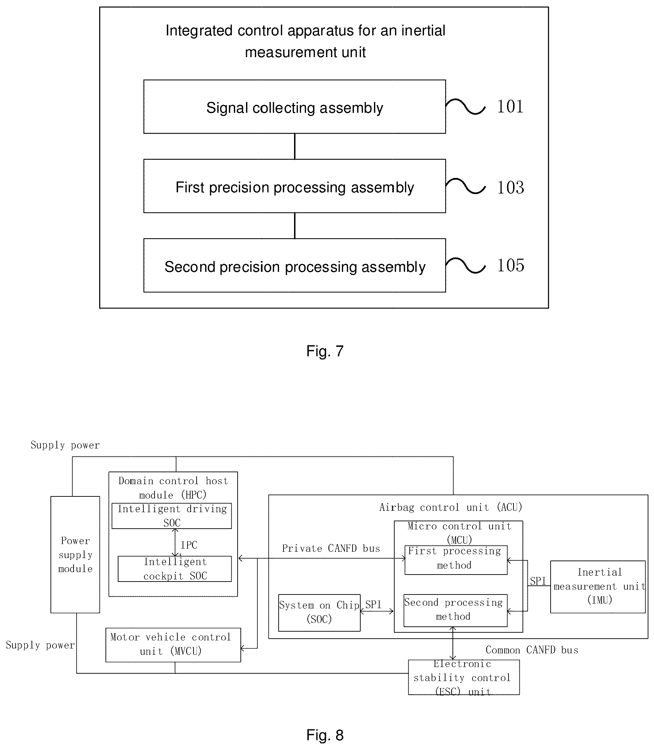

Hereinafter, the specific implementation of the present application will be described with reference to a specific application scenario. Fig. 7 is a block diagram of an integrated control apparatus for an inertial measurement unit provided according to some embodiments of the present application. In the specific application scenario, the system includes:
a power supply module, configured to supply power to a domain control host module, an airbag control unit, a motor vehicle control unit and an electronic stability control unit.

The airbag control unit, configured to receive an original inertial measurement signal collected by the inertial measurement unit through an SPI bus. The inertial measurement unit collects original inertial measurement signals at a sampling rate of at least 1 kHz, including acceleration signals in three directions and gyroscope angular velocity signals in three directions. A micro control unit processes the original inertial measurement signals in a first method (including low pass filter and temperature compensation) to obtain a first precision inertial measurement signal; and the first precision inertial measurement signal is transmitted to the domain control host module and the motor vehicle control unit through a private CANFD bus, so as to satisfy the requirements of high precision for intelligent driving and motor vehicle control. The micro control unit processes the original inertial measurement signal in a second method (including performing filtering over a sliding window) to obtain a second precision inertial measurement signal; and the second precision inertial measurement signal is transmitted to a System on Chip (SOC) through an SPI bus to perform airbag algorithm calibration, so as to satisfy low-latency requirement of airbag control; and the second precision inertial measurement signal is transmitted to the electronic stability control unit through a common CANFD bus, so as to satisfy a low latency requirement of dynamic stability detection of the vehicle.

The domain control host module, configured to receive and process the first precision inertial measurement signal through the private CANFD bus; the domain control host module includes an intelligent driving SOC and an intelligent cockpit SOC of a vehicle; the intelligent driving SOC and the intelligent cockpit SOC perform data exchange via an IPC bus; and the first precision inertial measurement signal is processed so as to satisfy high requirements of the intelligent driving for signal precision and latency.

The motor vehicle control unit, configured to receive and process the first precision inertial measurement signal by the private CANFD bus, and control a motor of the vehicle according to the signal, thereby realizing efficient driving and energy management of the vehicle.

The electronic stability control unit, configured to receive the second precision inertial measurement signal through the common CANFD bus, and monitor and adjust the driving stability of the vehicle in real time according to the signal, so as to improve the maneuvering performance and safety of the vehicle.

Accordingly, please refer to Fig. 8, which is a block diagram of an integrated control system for an inertial measurement unit provided according to some embodiments of the present application, which is applied to an airbag control unit, wherein the airbag control unit is integrated with the inertial measurement unit; the apparatus includes:
a signal collecting assembly 101, configured to collect, by the inertial measurement unit after power-on and initialization are completed, an original inertial measurement signal;
a first precision processing assembly 103, configured to determine, in response to receiving the original inertial measurement signal, a first precision inertial measurement signal corresponding to the original inertial measurement signal, and configured to transmit the first precision inertial measurement signal to a domain control host module and a motor vehicle control unit through a dedicated communication link; and
a second precision processing assembly 105, configured to determine, in response to receiving the original inertial measurement signal, a second precision inertial measurement signal corresponding to the original inertial measurement signal, and configured to transmit the second precision inertial measurement signal to a system-on-chip in the airbag control unit through an internal communication link to perform airbag algorithm calibration; and configured to transmit the second precision inertial measurement signal to an electronic stability control unit through a common communication link.

In some embodiments, in response to receiving the original inertial measurement signal, the first precision inertial measurement signal corresponding to the original inertial measurement signal is determined, includes:
in response to receiving the original inertial measurement signal, low pass filter processing is performed on the original inertial measurement signal to obtain a filtered inertial measurement signal;
a compensation value corresponding to the filtered inertial measurement signal is determined; and
the filtered inertial measurement signal is compensated by using the compensation value, to obtain the first precision inertial measurement signal.

In some embodiments, the compensation value corresponding to the filtered inertial measurement signal is determined, includes:
a current working temperature of the inertial measurement unit is acquired; and
a compensation value is determined according to the current working temperature and a pre-configured temperature compensation coefficient.

In some embodiments, the temperature compensation coefficient is acquired by the following method:
the inertial measurement unit is calibrated at a plurality of preset temperature points, and an acceleration zero deviation and a gyroscope angular velocity zero deviation at each of the plurality of preset temperature points are acquired; and
the temperature compensation coefficient is obtained according to a zero deviation fit of the acceleration zero deviation and the gyroscope angular velocity zero deviation.

In some embodiments, the dedicated communication link adopts a private CANFD bus, and the first precision inertial measurement signal is transmitted to the domain control host module and the motor vehicle control unit, includes:
the first precision inertial measurement signal is transmitted to the domain control host module and the motor vehicle control unit through the private CANFD bus at a transmission period of a first specified time; and
the common communication link adopts a common CANFD bus, and the second precision inertial measurement signal is transmitted to the electronic stability control unit, includes:
   the second precision inertial measurement signal is transmitted to the electronic stability control unit through the common CANFD bus at a transmission period of a second specified time;
   wherein the first specified time is less than the second specified time.

In some embodiments, in response to receiving the original inertial measurement signal, the second precision inertial measurement signal corresponding to the original inertial measurement signal is determined, includes:
in response to receiving the original inertial measurement signal, a sliding window is moved over the original inertial measurement signal, and an average value in the sliding window in a current time sequence is determined; and
the average value is determined as the second precision inertial measurement signal corresponding to the current time sequence.

In some embodiments, the sliding window is moved over the original inertial measurement signal, and the average value in the sliding window in the current time sequence is determined, includes:
a length of the sliding window is determined; and
in the current time sequence, values of all original inertial measurement signals in the sliding window are added, and a sum is divided by the length to obtain the average value.

Further function descriptions of the modules and units as described above are the same as those of corresponding embodiments, thus they will not be further repeated herein.

The integrated control apparatus for an inertial measurement unit in the present embodiment is presented in the form of functional units, where the units herein refer to an ASIC (Application Specific Integrated Circuit), a processor and a memory that execute one or more software or fixed programs, and/or other devices that can provide the functions above.

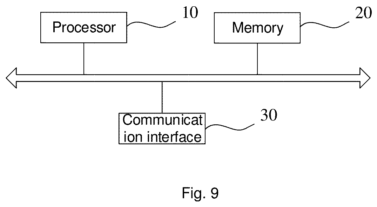

Please refer to Fig. 9, Fig. 9 is a schematic structural diagram of a computer device provided according to some embodiments of the present application. As shown in Fig. 9, the computer device includes: one or more processors 10, a memory 20, and an interface for connecting components, including a high-speed interface and a low-speed interface. The respective components are in communication connection with each other using different buses, and may be mounted on a common main board or mounted in other ways as necessary. The processor may process instructions executed within the computer device, including instructions stored in the memory or on the memory to display graphical information of a GUI on an external input/output apparatus (such as a display device coupled to the interface). In some embodiments, a plurality of processors and/or buses may be used with a plurality of memories, if desired. Also, a plurality of computer devices can be connected, and each device provides a part of necessary operations (e.g., as a server array, a set of blade servers, or a multi-processor system). In Fig. 9, one processor 10 is taken as an example.

The processor 10 may be a central processing unit, a network processing unit, or a combination thereof. The processor 10 can further include a hardware chip. The hardware chip may be an application-specific integrated circuit, a programmable logic device, or a combination thereof. The programmable logic device may be a complex programmable logic device, a field programmable logic gate array, general array logic or any combination thereof.

The memory 20 stores instructions executable by the at least one processor 10, so that the at least one processor 10 executes the method shown in the embodiments above.

The memory 20 includes a program storage area and a data storage area, wherein the program storage area may store an operating system and an application program required by at least one function; the storage data area may store data created according to use of the computer device, and the like. In addition, the memory 20 may include a high-speed random access memory, and can further include a non-transient memory, for example, at least one magnetic disk storage device, a flash memory device, or other non-transient solid-state storage devices. In some embodiments, the memory 20 may optionally include memories remotely located relative to processor 10, and these remote memories may be connected to the computer device over a network. Examples of such networks include, but are not limited to, the Internet, intranet, local area network, mobile communication network, and combinations thereof.

The memory 20 may include a transitory memory, e.g., a random access memory; the memory may also include a non- transitory memory, such as a flash memory, a hard disk, or a solid state disk; and the memory 20 may also include a combination of memories as described above.

The computer device also includes a communication interface 30, for the computer device to communicate with other devices or communication networks.

Embodiments of the present application further provide a computer-readable storage medium. The method according to the embodiments of the present application can be implemented in hardware or firmware, or computer codes implemented as being recorded in a storage medium, or implemented as being downloaded over a network and originally stored in a remote storage medium or a non-transitory machine-readable storage medium and being stored in a local storage medium, thus the method described herein may be stored in such software processing on storage media using a general-purpose computer, a dedicated processor, or programmable or dedicated hardware. The storage medium may be a magnetic disk, an optical disk, a read-only memory, a random access memory, a flash memory, a hard disk, or a solid-state disk; further, the storage medium may also include a combination of the memories as described above. It will be appreciated that a computer, processor, microprocessor controller or programmable hardware include a memory assembly that may store or receive software or computer codes that when accessed and executed by the computer, processor or hardware, implement the method illustrated in the embodiments as described above.

The apparatus, module, or unit described in the foregoing embodiments may be specifically implemented by a computer chip or an entity, or implemented by a product having a certain function. A typical implementation device is a computer. In particular, the computer may be, for example, a personal computer, a laptop computer, a cellular telephone, a camera phone, a smartphone, a personal digital assistant, a media player, a navigation device, an email device, a game console, a tablet computer, a wearable device, or a combination of any of these devices.

For the convenience of description, the foregoing apparatus is described by dividing functions into various units. Of course, the functions of each unit may be implemented in the same one or more pieces of software and/or hardware when implementing the present application.

A person skilled in the art shall understand that the embodiments of the present application can be provided as methods and apparatuses. Therefore, the present application may take the form of an entirely hardware embodiment, an entirely software embodiment or an embodiment combining software and hardware. Furthermore, the present application may take the form of a computer program product implemented on one or more computer-usable storage media (including but not limited to a disk memory, a CD-ROM, an optical memory, etc.) containing computer-usable program codes.

The present application is described with reference to the flowcharts and/or block diagrams of the method, device and apparatus according to embodiments of the present application. It should be understood that each flow and/or block in the flowcharts and/or block diagrams and combinations of flows and/or blocks in the flowcharts and/or block diagrams can be implemented by computer program instructions. These computer program instructions may be provided to a processor of a general-purpose computer, a dedicated computer, an embedded processor or other programmable data processing devices to produce a machine, such that instructions executed by a processor of a computer or other programmable data processing devices generate an apparatus that implements the functions specified in one or more flows in the flowcharts and/or one or more blocks in the block diagrams.

These computer program instructions may also be stored in a computer-readable memory capable of guiding the computer or other programmable data processing apparatuses to work in a specific method, so that the instructions stored in a readable memory of the computer generate a manufactured product including an instruction apparatus, and the instruction apparatus implements functions specified in one or more flows in the flowcharts and/or one or more blocks in the block diagrams.

These computer program instructions may also be loaded onto the computer or other programmable data processing devices, such that a series of operation steps are performed on the computer or other programmable device to produce computer-implemented processing, thus, the instructions executed on the computer or other programmable devices provide steps for implementing the functions specified in one or more flows in the flowcharts and/or one or more blocks in the block diagrams.

It should also be noted that the terms "include", "contain", or any other variation thereof are intended to cover a non-exclusive inclusion, so that a process, method, commodity, or device that includes a series of elements not only includes those elements, but also includes other elements that are not explicitly listed, or further includes inherent elements of the process, method, commodity, or device. Without more limitations, an element limited by "include a ... " does not exclude other same elements existing in a process, method, commodity, or device that includes the element.

The embodiments in this description are described in a progressive method, the same or similar parts of the embodiments may refer to each other, and each embodiment focuses on differences from other embodiments. In particular, for apparatus embodiments, since the apparatus embodiments are basically similar to the method embodiments, the description thereof is relatively simple; and for the relevant parts, reference may be made to the description of the method embodiments.

The descriptions above are merely embodiments of the present application, but are not intended to limit the present application. For those skilled in the art, the present application may have various modifications and variations. Any modifications, equivalent replacements, improvements and the like made within the spirit and principle of the present application shall fall within the scope of the claims of the present application.

Although the embodiments of the present application are described in conjunction with the accompanying drawings, various modifications and variations can be made by those skilled in the art without departing from the spirit and scope of the present application, and all such modifications and variations fall within the scope of protection defined by the appended claims.

## Claims

1. An integrated control method for an inertial measurement unit, which is applied to an airbag control unit, wherein the airbag control unit is integrated with the inertial measurement unit; the method comprises:
after power-on and initialization are completed, collecting, by the inertial measurement unit, an original inertial measurement signal;
in response to receiving the original inertial measurement signal, determining a first precision inertial measurement signal corresponding to the original inertial measurement signal, and transmitting the first precision inertial measurement signal to a domain control host module and a motor vehicle control unit through a dedicated communication link; and
in response to receiving the original inertial measurement signal, determining a second precision inertial measurement signal corresponding to the original inertial measurement signal, and transmitting the second precision inertial measurement signal to a system-on-chip in the airbag control unit through an internal communication link to perform airbag algorithm calibration; and transmitting the second precision inertial measurement signal to an electronic stability control unit through a common communication link.

2. The method according to claim 1, wherein in response to receiving the original inertial measurement signal, determining the first precision inertial measurement signal corresponding to the original inertial measurement signal, comprises:
in response to receiving the original inertial measurement signal, performing low pass filter processing on the original inertial measurement signal to obtain a filtered inertial measurement signal;
determining a compensation value corresponding to the filtered inertial measurement signal; and
compensating the filtered inertial measurement signal by using the compensation value, to obtain the first precision inertial measurement signal.

3. The method according to claim 2, wherein determining the compensation value corresponding to the filtered inertial measurement signal, comprises:
acquiring a current working temperature of the inertial measurement unit; and
determining a compensation value according to the current working temperature and a pre-configured temperature compensation coefficient.

4. The method according to claim 3, wherein the temperature compensation coefficient is acquired in a following method:
calibrating the inertial measurement unit at a plurality of preset temperature points, and acquiring an acceleration zero deviation and a gyroscope angular velocity zero deviation at each of the plurality of preset temperature points; and
obtaining the temperature compensation coefficient according to a zero deviation fit of the acceleration zero deviation and the gyroscope angular velocity zero deviation.

5. The method according to claim 1, wherein the dedicated communication link adopts a private CANFD bus, and transmitting the first precision inertial measurement signal to the domain control host module and the motor vehicle control unit, comprises:
transmitting the first precision inertial measurement signal to the domain control host module and the motor vehicle control unit through the private CANFD bus at a transmission period of a first specified time; and
the common communication link adopts a common CANFD bus, and transmitting the second precision inertial measurement signal to the electronic stability control unit, comprises:
transmitting the second precision inertial measurement signal to the electronic stability control unit through the common CANFD bus at a transmission period of a second specified time;
wherein the first specified time is less than the second specified time.

6. The method according to claim 1, wherein in response to receiving the original inertial measurement signal, determining the second precision inertial measurement signal corresponding to the original inertial measurement signal, comprises:
in response to receiving the original inertial measurement signal, moving a sliding window over the original inertial measurement signal, and determining an average value in the sliding window in a current time sequence; and
determining the average value as the second precision inertial measurement signal corresponding to the current time sequence.

7. The method according to claim 6, wherein moving the sliding window over the original inertial measurement signal, and determining the average value in the sliding window in the current time sequence, comprises:
determining a length of the sliding window; and
in the current time sequence, adding values of all original inertial measurement signals in the sliding window, and dividing a sum by the length to obtain the average value.

8. An integrated control apparatus for an inertial measurement unit, which is applied to an airbag control unit, wherein the airbag control unit is integrated with the inertial measurement unit; the apparatus comprises:
a signal collecting assembly, configured to collect, by the inertial measurement unit after power-on and initialization are completed, an original inertial measurement signal;
a first precision processing assembly, configured to determine, in response to receiving the original inertial measurement signal, a first precision inertial measurement signal corresponding to the original inertial measurement signal, and configured to transmit the first precision inertial measurement signal to a domain control host module and a motor vehicle control unit through a dedicated communication link; and
a second precision processing assembly, configured to determine, in response to receiving the original inertial measurement signal, a second precision inertial measurement signal corresponding to the original inertial measurement signal, and configured to transmit the second precision inertial measurement signal to a system-on-chip in the airbag control unit through an internal communication link to perform airbag algorithm calibration; and configured to transmit the second precision inertial measurement signal to an electronic stability control unit through a common communication link.

9. A computer device, comprising:
a memory and a processor, wherein the memory and the processor are in communication connection with each other; the memory stores computer instructions; and the processor executes, by executing the computer instructions, the integrated control method for an inertial measurement unit according to any one of claims 1 to 7.

10. A computer-readable storage medium, wherein the computer-readable storage medium stores computer instructions, wherein the computer instructions are used to enable a computer to execute the integrated control method for an inertial measurement unit according to any one of claims 1 to 7.

## Amended claims

### Amended claims in accordance with Rule 137(2) EPC.

1. An integrated control method for an inertial measurement unit, which is applied to an airbag control unit, wherein the airbag control unit is integrated with the inertial measurement unit; the method comprises after power-on and initialization are completed, collecting, by the inertial measurement unit, an original inertial measurement signal; **characterized in that** the method further comprises:
in response to receiving the original inertial measurement signal, determining a first precision inertial measurement signal corresponding to the original inertial measurement signal, and transmitting the first precision inertial measurement signal to a domain control host module and a motor vehicle control unit through a dedicated communication link; and
in response to receiving the original inertial measurement signal, determining a second precision inertial measurement signal corresponding to the original inertial measurement signal, and transmitting the second precision inertial measurement signal to a system-on-chip in the airbag control unit through an internal communication link to perform airbag algorithm calibration; and transmitting the second precision inertial measurement signal to an electronic stability control unit through a common communication link;
in response to receiving the original inertial measurement signal, determining the first precision inertial measurement signal corresponding to the original inertial measurement signal, comprises: in response to receiving the original inertial measurement signal, performing low pass filter processing on the original inertial measurement signal to obtain a filtered inertial measurement signal; determining a compensation value corresponding to the filtered inertial measurement signal; and compensating the filtered inertial measurement signal by using the compensation value, to obtain the first precision inertial measurement signal;
in response to receiving the original inertial measurement signal, determining the second precision inertial measurement signal corresponding to the original inertial measurement signal, comprises: in response to receiving the original inertial measurement signal, moving a sliding window over the original inertial measurement signal, and determining an average value in the sliding window in a current time sequence; and determining the average value as the second precision inertial measurement signal corresponding to the current time sequence.

2. The method according to claim 1, wherein determining the compensation value corresponding to the filtered inertial measurement signal, comprises:
acquiring a current working temperature of the inertial measurement unit; and
determining a compensation value according to the current working temperature and a preconfigured temperature compensation coefficient.

3. The method according to claim 2, wherein the temperature compensation coefficient is acquired in a following method:
calibrating the inertial measurement unit at a plurality of preset temperature points, and acquiring an acceleration zero deviation and a gyroscope angular velocity zero deviation at each of the plurality of preset temperature points; and
obtaining the temperature compensation coefficient according to a zero deviation fit of the acceleration zero deviation and the gyroscope angular velocity zero deviation.

4. The method according to claim 1, wherein the dedicated communication link adopts a private CANFD bus, and transmitting the first precision inertial measurement signal to the domain control host module and the motor vehicle control unit, comprises:
transmitting the first precision inertial measurement signal to the domain control host module and the motor vehicle control unit through the private CANFD bus at a transmission period of a first specified time; and
the common communication link adopts a common CANFD bus, and transmitting the second precision inertial measurement signal to the electronic stability control unit, comprises:
transmitting the second precision inertial measurement signal to the electronic stability control unit through the common CANFD bus at a transmission period of a second specified time;
wherein the first specified time is less than the second specified time.

5. The method according to claim 1, wherein moving the sliding window over the original inertial measurement signal, and determining the average value in the sliding window in the current time sequence, comprises:
determining a length of the sliding window; and
in the current time sequence, adding values of all original inertial measurement signals in the sliding window, and dividing a sum by the length to obtain the average value.

6. An integrated control apparatus for an inertial measurement unit, which is applied to an airbag control unit, wherein the airbag control unit is integrated with the inertial measurement unit; the apparatus comprises a signal collecting assembly (101), the signal collecting assembly (101) configured to collect, by the inertial measurement unit after power-on and initialization are completed, an original inertial measurement signal; **characterized in that** the apparatus further comprises:
a first precision processing assembly (103), configured to determine, in response to receiving the original inertial measurement signal, a first precision inertial measurement signal corresponding to the original inertial measurement signal, and configured to transmit the first precision inertial measurement signal to a domain control host module and a motor vehicle control unit through a dedicated communication link; and
a second precision processing assembly (105), configured to determine, in response to receiving the original inertial measurement signal, a second precision inertial measurement signal corresponding to the original inertial measurement signal, and configured to transmit the second precision inertial measurement signal to a system-on-chip in the airbag control unit through an internal communication link to perform airbag algorithm calibration; and configured to transmit the second precision inertial measurement signal to an electronic stability control unit through a common communication link;
in response to receiving the original inertial measurement signal, determining the first precision inertial measurement signal corresponding to the original inertial measurement signal, comprises: in response to receiving the original inertial measurement signal, performing low pass filter processing on the original inertial measurement signal to obtain a filtered inertial measurement signal; determining a compensation value corresponding to the filtered inertial measurement signal; and compensating the filtered inertial measurement signal by using the compensation value, to obtain the first precision inertial measurement signal;
in response to receiving the original inertial measurement signal, determining the second precision inertial measurement signal corresponding to the original inertial measurement signal, comprises: in response to receiving the original inertial measurement signal, moving a sliding window over the original inertial measurement signal, and determining an average value in the sliding window in a current time sequence; and determining the average value as the second precision inertial measurement signal corresponding to the current time sequence.
